# EUROPEAN PATENT SPECIFICATION

(11) **EP 4 462 531 B1**
(45) Date of publication and mention of the grant of the patent: **20.08.2025**
(21) Application number: 24163299.1
(22) Date of filing: 13.03.2024
(51) Int. Cl.: H01M 10/04, H01M 50/466, H01M 10/0566, H01M 10/0583

(54) **POWER STORAGE CELL**
STROMSPEICHERZELLE
CELLULE DE STOCKAGE D'ÉNERGIE

(30) Priority: 12.05.2023 JP 2023079351
(43) Date of publication of application: 13.11.2024
(73) Proprietor: TOYOTA JIDOSHA KABUSHIKI KAISHA, Toyota-shi, Aichi-ken, 471-8571 (JP)
(72) Inventor: SUGIHARA, Atsushi, Toyota-shi, 471-8571 (JP); KAKISHITA, Kenichi, Toyota-shi, 471-8571 (JP); IZUMI, Jun, Toyota-shi, 471-8571 (JP); MIMURA, Tetsuya, Toyota-shi, 471-8571 (JP); OHATA, Kota, Toyota-shi, 471-8571 (JP); KURASHITA, Nana, Toyota-shi, 471-8571 (JP); TAKAHASHI, Yuki, Toyota-shi, 471-8571 (JP)
(74) Representative: J A Kemp LLP

(56) References cited:
- KR-A- 20160 024 089
- US-A1- 2022 094 020

## Description

### BACKGROUND

### Field

The present disclosure relates to a power storage cell.

### Description of the Background Art

Japanese Patent Laying-Open No. 2014-67619 discloses a secondary battery that includes an electrode assembly and a case. The electrode assembly includes a plurality of electrodes and a separator provided between adjacent electrodes, and the case houses the electrode assembly and an electrolytic solution. The separator is formed in a zigzag shape.

KR 2016 0024089 A discloses a separation layer of a lithium polymer secondary battery and a lithium polymer secondary battery. Provided is the separation layer of the lithium polymer secondary battery comprising a desorption prevention member formed on a foldable area of the separation layer between electrode panels to prevent ceramic coating being desorbed.

US 2022/094020 A1 discloses a stacked secondary battery having an electrode body in which at least one positive and at least one negative plate are stacked, with a multilayered separator interposed, said separator including two porous layers of different materials; and an outer packaging case housing an insulating holder and an electrolyte together, said insulating holder housing the electrode body and being formed of overlapping sheets comprises an insulating material. The outer packaging case has a bottom surface, a plurality of side walls that are provided standing upright from the bottom surface, and an opening that is opposite from the bottom surface. In at least one separator, a section that is exposed from end surfaces of active material mixture layers and metal foil-comprising core bodies of the positive plate and the negative plate is in contact with the vicinity of a bottom line of a valley section that is formed from the sheet.

### SUMMARY

In the secondary battery described in Japanese Patent Laying-Open No. 2014-67619, since the electrolytic solution is released from the negative electrode during the charging/discharging or the like, it is concerned that the negative electrode may become short of the electrolytic solution.

It is an object of the present disclosure to provide a power storage cell capable of preventing the negative electrode from becoming short of an electrolytic solution.

It is the object of the present invention to provide a power storage cell as defined in appended claim 1.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a perspective view schematically illustrating a power storage cell according to an embodiment of the present disclosure;
Fig. 2 is a cross-sectional view of the power storage cell illustrated in Fig. 1;
Fig. 3 is a cross-sectional view of an electrode assembly;
Fig. 4 is a plan view of a separator before being formed in a zigzag shape;
Fig. 5 is a perspective view schematically illustrating a step of connecting an electrode tab and a collector tab;
Fig. 6 is a perspective view schematically illustrating a step of bending the electrode tab and the collector tab;
Fig. 7 is a perspective view schematically illustrating a step of inserting the electrode assembly into the case body; and
Fig. 8 is a perspective view schematically illustrating an electrode assembly according to a modification.

### DESCRIPTION OF THE PREFERRED EMBODIMENTS

Embodiments of the present disclosure will be described with reference to the drawings. In the following drawings, the same or corresponding members are denoted by the same reference numerals.

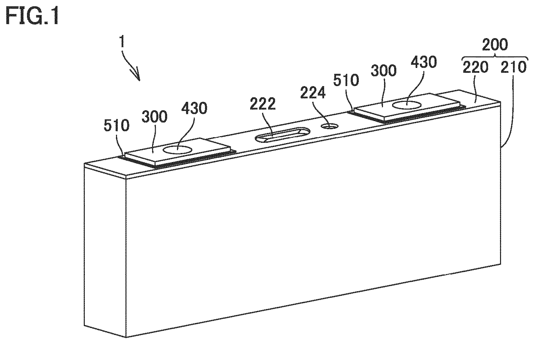

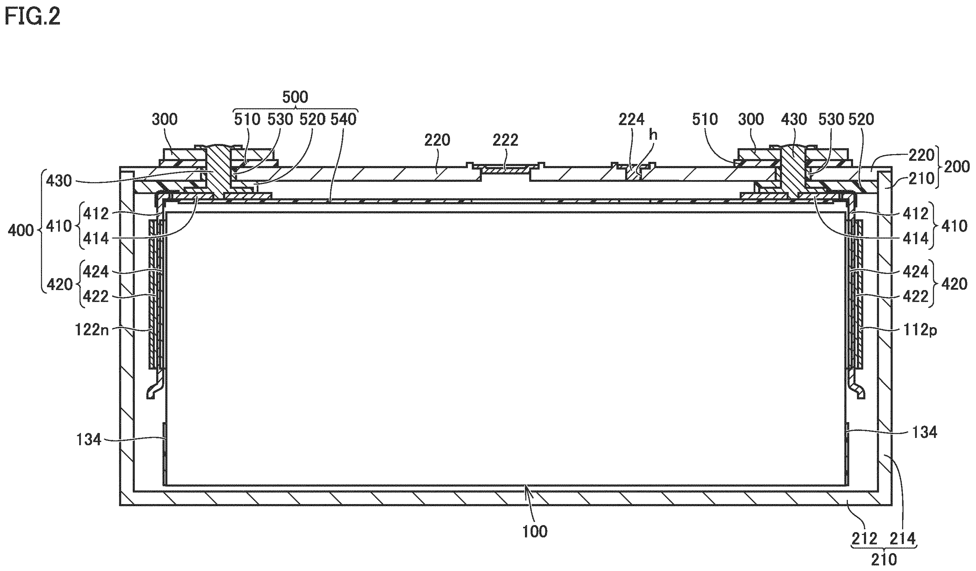

Fig. 1 is a perspective view schematically illustrating a power storage cell 1 according to an embodiment of the present disclosure. Fig. 2 is a cross-sectional view of the power storage cell 1 illustrated in Fig. 1.

As illustrated in Figs. 1 and 2, the power storage cell 1 includes an electrode assembly 100, a cell case 200, an electrolytic solution (not illustrated), a pair of external terminals 300, a pair of connecting members 400, and an insulating member 500.

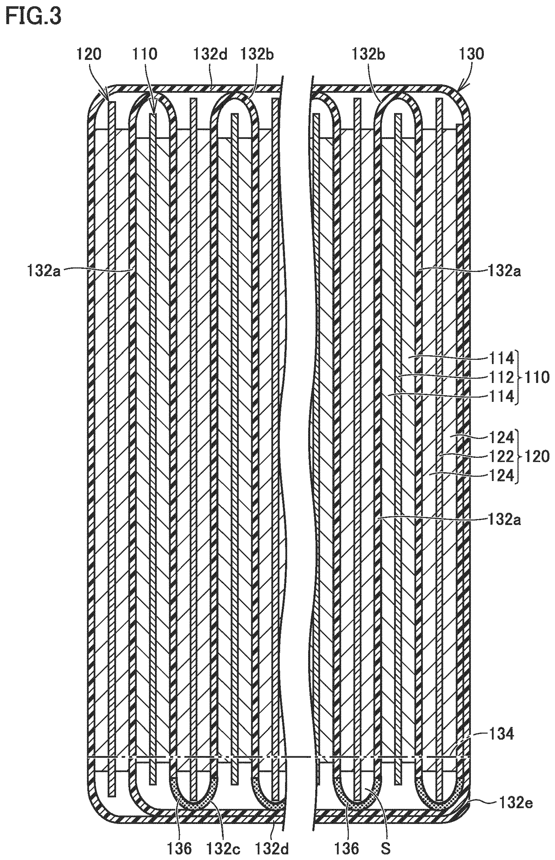

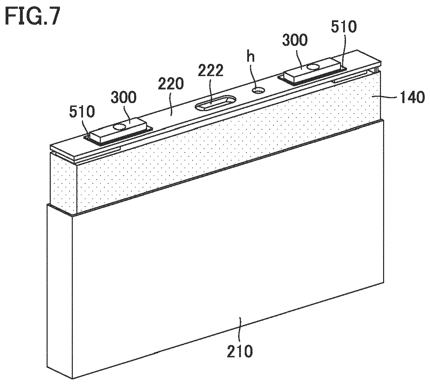

Fig. 3 is a cross-sectional view of the electrode assembly 100. As illustrated in Fig. 3, the electrode assembly 100 includes a plurality of electrodes 110 and 120, a separator 130, and an insulating film 140 (see Fig. 7).

As illustrated in Fig. 3, the plurality of electrodes 110 and 120 are arranged side by side in one direction (the lateral direction in Fig. 3). The plurality of electrodes 110 and 120 include a plurality of positive electrodes 110 and a plurality of negative electrodes 120.

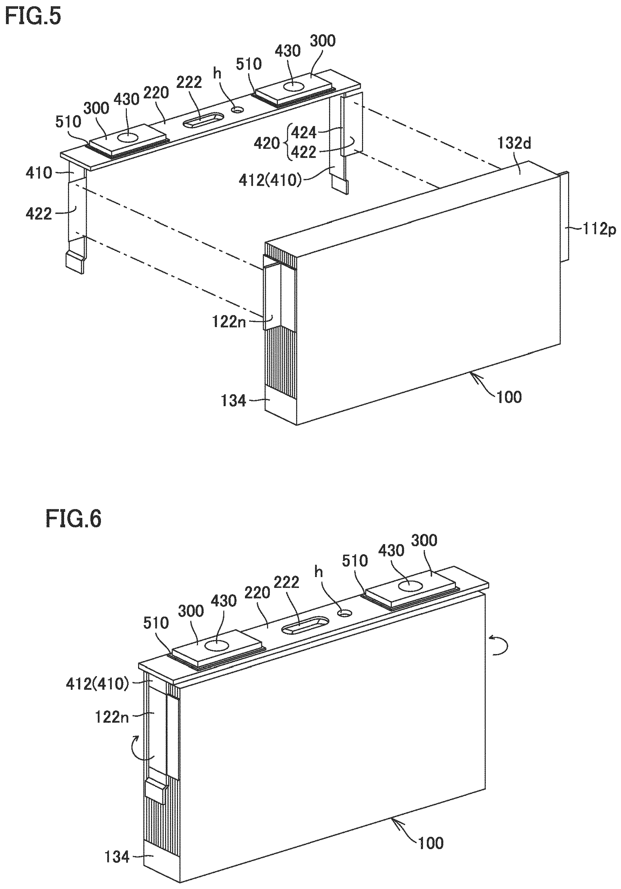

Each positive electrode 110 is formed in a rectangular shape elongated in a width direction (a direction orthogonal to both the one direction and the vertical direction). Each positive electrode 110 includes a positive electrode collector foil 112 and a positive electrode active material layer 114 provided on both surfaces of the positive electrode collector foil 112. As illustrated in Figs. 2 and 5, the positive electrode collector foil 112 includes a positive electrode tab 112p on which the positive electrode active material layer 114 is not provided. The positive electrode tab 112p protrudes toward one side of the width direction (a direction orthogonal to the paper surface of Fig. 3).

Each negative electrode 120 is formed in a rectangular shape elongated in the width direction. Each negative electrode 120 includes a negative electrode collector foil 122 and a negative electrode active material layer 124 provided on both surfaces of the negative electrode collector foil 122. As illustrated in Figs. 2 and 5, the negative electrode collector foil 122 includes a negative electrode tab 122n on which the negative electrode active material layer 124 is not provided. The negative electrode tab 122n protrudes toward the other side of the width direction.

The separator 130 insulates the positive electrode 110 and the negative electrode 120 from each other. The separator 130 is made of an insulating material, and has minute voids that allow ions to pass through. As illustrated in Fig. 3, the separator 130 is formed in a zigzag shape.

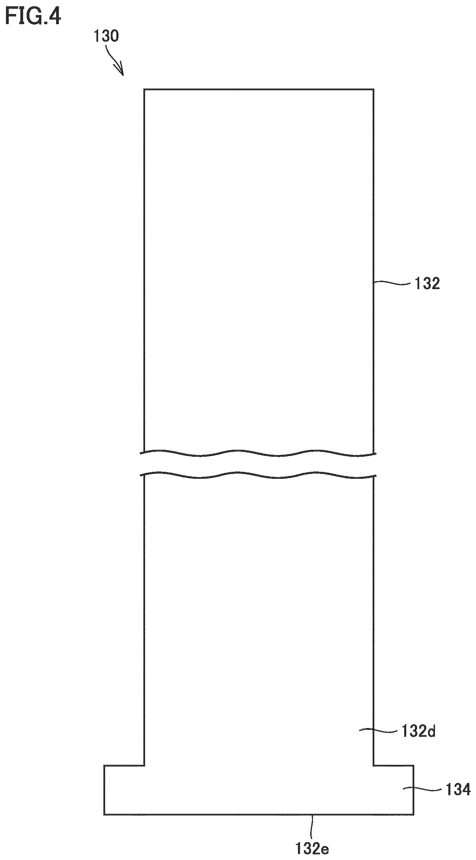

As illustrated in Fig. 4, the separator 130 includes a separator body 132 and a side covering portion 134.

The separator body 132 has a rectangular shape before being formed in a zigzag shape. The separator body 132 is formed in a zigzag shape and is arranged between the electrodes 110 and 120. The separator body 132 includes a plurality of intervening portions 132a, a plurality of upper folded portions 132b, a plurality of lower folded portions 132c, and an outermost covering portion 132d.

Each intervening portion 132a is interposed between a pair of electrodes 110 and 120 adjacent to each other in the one direction. In other words, each intervening portion 132a functions to insulate the positive electrode 110 and the negative electrode 120 from each other. Each intervening portion 132a is formed in a rectangular shape.

Each upper folded portion 132b connects an upper end of one intervening portion 132a of the plurality of intervening portions 132a to an upper end of another intervening portion 132a of the plurality of intervening portions 132a which is adjacent to the one intervening portion 132a on one side of the one direction. In the present embodiment, the upper folded portion 132b is disposed above the positive electrode 110.

Each lower folded portion 132c connects a lower end of one intervening portion 132a of the plurality of intervening portions 132a to a lower end of another intervening portion 132a of the plurality of intervening portions 132a which is adjacent to the one intervening portion 132a on the other side of the one direction. In the present embodiment, the lower folded portion 132c is disposed below the negative electrode 120. In other words, the negative electrode 120 is disposed above the lower folded portion 132c. The porosity of the lower folded portion 132c is smaller than the porosity of the intervening portion 132a. For example, the porosity of the lower folded portion 132c is 10% to 30%, and the porosity of the intervening portion 132a is 40% to 60%. The porosity is measured by, for example, mercury porosimetry.

In the present embodiment, the lower folded portion 132c is provided with a void filling material 136 that fills voids in the separator 130. The void filling material 136 preferably has a property of repelling an electrolytic solution (liquid repellency). Examples of the void filling material 136 include polyvinylidene fluoride (PVdF), carboxymethyl cellulose (CMC), and polyimide. In Fig. 3, the void filling material 136 is indicated by dots. The dimension of the void filling material 136 in the vertical direction is preferably set to 1 mm or more.

The void filling material 136 may be provided on the lower folded portion 132c by applying the void filling material 136 in advance according to a gravure coating (intermittent coating) method to a portion of the separator body 132 which becomes the lower folded portion 132c after the separator body 132 is formed in a zigzag shape, and then drying the same. Alternatively, the void filling material 136 may be provided on the lower folded portion 132c by immersing each lower folded portion 132c in a container containing the void filling material 136 after the separator body 132 is formed in a zigzag shape, and then drying the same.

The outermost covering portion 132d collectively covers each upper folded portion 132b and each lower folded portion 132c. More specifically, the outermost covering portion 132d collectively covers all of the electrodes 110 and 120, all of the intervening portions 132a, all of the upper folded portions 132b and all of the lower folded portions 132c while being wound around a central axis parallel to the width direction. A terminal end 132e (see Figs. 3 and 4) of the outermost covering portion 132d is configured not to overlap with the positive electrode active material layer 114 and the negative electrode active material layer 124 in the one direction. In the present embodiment, the terminal end 132e of the outermost covering portion 132d is provided below each of the electrodes 110 and 120.

The side covering portion 134 faces both ends of the plurality of electrodes 110 and 120 in the width direction. In Fig. 3, the side covering portion 134 is indicated by a two-dot chain line. The side covering portion 134 is connected to the lower folded portion 132c. As illustrated in Fig. 4, in the present embodiment, the side covering portion 134 protrudes in a direction orthogonal to a longitudinal direction of the separator body 132 from an end of the separator body 132 in the longitudinal direction. The side covering portion 134 is connected to all the lower folded portions 132c arranged side by side in the one direction. The side covering portion 134 and the lower folded portion 132c form a storage space S (see Fig. 3) for storing the electrolytic solution below the negative electrode 120. The side covering portion 134 is provided with a void filling material that fills voids in the separator 130.

The insulating film 140 collectively covers the peripheral surface and bottom surface of the plurality of electrodes 110 and 120 and the separator 130. In Fig. 7, the insulating film 140 is indicated by dots.

The cell case 200 houses the electrode assembly 100. The cell case 200 contains an electrolytic solution (not illustrated). The cell case 200 is sealed. The cell case 200 includes a case body 210 and a lid 220.

The case body 210 has an opening that opens upward. The case body 210 is made of a metal such as aluminum. As illustrated in Fig. 2, the case body 210 includes a bottom wall 212 and a peripheral wall 214. The bottom wall 212 is formed in a rectangular flat plate shape. The peripheral wall 214 rises from the bottom wall 212. The peripheral wall 214 is formed in a quadrangular cylindrical shape. The length of the peripheral wall 214 in the width direction is longer than the length of the peripheral wall 214 in the thickness direction. The length of the peripheral wall 214 in the height direction is longer than the length of the peripheral wall 214 in the thickness direction.

The lid 220 closes the opening of the case body 210. The lid 220 is connected to the opening by welding or the like. The lid 220 is formed in a flat plate shape. The lid 220 is made of a metal such as aluminum. The lid 220 includes a pressure release valve 222 and a sealing member 224.

The pressure release valve 222 is formed at a central portion of the lid 220. The pressure release valve 222 is configured to break when the internal pressure of the cell case 200 becomes equal to or higher than a predetermined pressure. When the pressure release valve 222 is broken, the gas in the cell case 200 is released to the outside of the cell case 200 through the pressure release valve 222, which reduces the internal pressure of the cell case 200.

The sealing member 224 seals a liquid injection port h formed in the lid 220. The liquid injection port h is a through hole for injecting an electrolytic solution into the cell case 200 in the manufacturing process of the power storage cell 1. After the electrolytic solution is injected into the case body 210 through the liquid injection port h, the liquid injection port h is sealed by the sealing member 224.

The pair of external terminals 300 is fixed to the cell case 200. One of the pair of external terminals 300 is a positive external terminal, and the other is a negative external terminal. Each external terminal 300 is fixed to an upper surface of the lid 220 via an upper insulating portion 510 which will be described later. Each external terminal 300 is made of a metal such as aluminum. Each external terminal 300 is formed, for example, in a rectangular parallelepiped shape. A bus bar (not illustrated) is connected to each external terminal 300 by welding or the like.

The pair of connecting members 400 connects a plurality of electrode tabs 112p and a plurality of electrode tabs 122n to the pair of external terminals 300, respectively. More specifically, one of the pair of connecting members 400 connects the plurality of positive electrode tabs 112p to the positive external terminal 300, and the other connecting member 400 connects the plurality of negative electrode tabs 122n to the negative external terminal 300. Since the pair of connecting members 400 have substantially the same structure, only one connecting member 400 will be described below.

The connecting member 400 includes a collector tab 410, a subtab 420, and a connecting pin 430.

The collector tab 410 has a side portion 412 and an upper portion 414. The side portion 412 is arranged on a side surface of the electrode assembly 100 in the width direction. The upper portion 414 is arranged on an upper surface of the electrode assembly 100. The upper portion 414 extends inward in the width direction from an upper end of the side portion 412.

The subtab 420 connects the plurality of positive electrode tabs 112p to the collector tab 410. One end 422 of the subtab 420 is connected to the plurality of positive electrode tabs 112p by welding or the like, and the other end 424 of the subtab 420 is connected to the side portion 412 of the collector tab 410 by welding or the like.

The connecting pin 430 connects the collector tab 410 to the external terminal 300. The connecting pin 430 connects the upper portion 414 to the external terminal 300. Specifically, the lower end of the connecting pin 430 is inserted into a through hole provided on the upper portion 414 and is connected to the upper portion 414 by welding or the like, and the upper end of the connecting pin 430 is inserted into a through hole provided on the external terminal 300 and is connected to the external terminal 300 by welding, caulking or the like.

The insulating member 500 insulates the cell case 200 and the connecting member 400 from each other. The insulating member 500 includes an upper insulating portion 510, a lower insulating portion 520, an insulator 530, and an insulating plate 540.

The upper insulating portion 510 is fixed to the upper surface of the lid 220. The upper insulating portion 510 is disposed between the lid 220 and the external terminal 300. The upper insulating portion 510 is provided with an insertion hole through which the connecting pin 430 is inserted.

The lower insulating portion 520 is fixed to the lower surface of the lid 220. The lower insulating portion 520 is disposed between the lid 220, and the upper portion 414 and a lower portion of the connecting pin 430. The lower insulating portion 520 is provided with an insertion hole through which the connecting pin 430 is inserted.

The insulator 530 is disposed between the connecting pin 430 and the lid 220. The insulator 530 is formed in a cylindrical shape, and is configured to surround the connecting pin 430.

The insulating plate 540 is fixed to the lower surface of the upper portion 414. The insulating plate 540 is disposed on the electrode assembly 100. A through hole is formed in a portion of the insulating plate 540 located below the pressure release valve 222 and a portion of the insulating plate 540 located below the liquid injection port h.

Next, a process of manufacturing the power storage cell 1 will be described with reference to Figs. 5 to 7.

First, while the separator body 132 is being formed in a zigzag shape, each electrode 110 and each electrode 120 are alternately disposed between a pair of intervening portions 132a. After winding the outermost covering portion 132d of the separator body 132, the side covering portion 134 is bent against the separator body 132 and connected to the lower folded portion 132c.

Next, as illustrated in Fig. 5, one end 422 of the subtab 420 is connected to the plurality of electrode tabs 112p and 122n by welding or the like. Then, as indicated by an arrow in Fig. 6, the end 422 and the plurality of electrode tabs 112p and 122n are bent in such a manner that the end 422 of the subtab 420 is in contact with the side portion 412 of the collector tab 410.

Subsequently, as illustrated in Fig. 7, after the peripheral surface and bottom surface of the plurality of electrodes 110, 120 and the separator 130 are collectively covered with the insulating film 140, the electrode assembly 100 is inserted into the case body 210. Then, the lid 220 is welded to the case body 210 to close the opening.

Thereafter, the electrolytic solution is supplied into the cell case 200 through the liquid injection port h, and the liquid injection port h is sealed with the sealing member 224.

As described above, in the electrode assembly 100 of the present embodiment, since the negative electrode 120 is disposed above the lower folded portion 132c, and the porosity of the lower folded portion 132c is smaller than the porosity of the intervening portion 132a, the electrolytic solution released from the negative electrode 120 during the charging/discharging or the like is effectively held by the lower folded portion 132c. Accordingly, the negative electrode 120 absorbs the electrolytic solution again, which thereby prevents the negative electrode 120 from becoming short of the electrolytic solution.

Further, since the separator 130 includes the side covering portion 134 which forms the storage space S together with the lower folded portion 132c, it is more reliable to prevent the negative electrode 120 from becoming short of the electrolytic solution. Furthermore, since the side covering portion 134 prevents misalignment between the lower folded portions 132c, which in turn prevents misalignment between the intervening portions 132a, and thereby it is not necessary to provide a dedicated member (such as a tape) for fixing the separator 130.

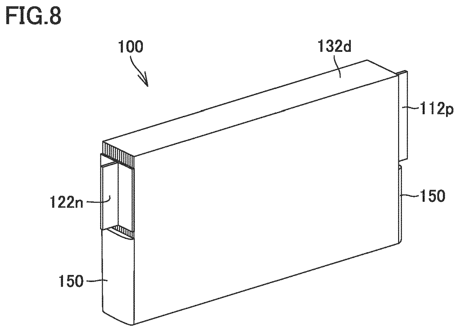

As illustrated in Fig. 8, the electrode assembly 100 may further include a liquid holding member 150 configured to hold an electrolytic solution. The liquid holding member 150 is different from the separator 130. The liquid holding member 150 is made of a porous material. The liquid holding member 150 is provided at an end portion of the plurality of electrodes 110 and 120 and the separator 130 in the width direction. The liquid holding member 150 may be provided at an upper end portion or a lower end portion of the plurality of electrodes 110 and 120 and the separator 130.

It will be appreciated by those skilled in the art that the exemplary embodiments described above are specific examples.

In the electrode assembly of the power storage cell of the present invention, since the negative electrode is disposed above the lower folded portion and the porosity of the lower folded portion is smaller than the porosity of the intervening portion, the electrolytic solution released from the negative electrode during the charging/discharging or the like is effectively held by the lower folded portion. Accordingly, the negative electrode absorbs the electrolytic solution again, which thereby prevents the negative electrode from becoming short of the electrolytic solution.

Also, since the storage space for storing the electrolytic solution is formed by the lower folded portion and the side covering portion, it is more reliable to prevent the negative electrode from becoming short of the electrolytic solution. Furthermore, since the side covering portion prevents misalignment between the lower folded portions, which in turn prevents misalignment between the intervening portions, and thereby, it is not necessary to provide a dedicated member (such as a tape) for fixing the separator.

In the power storage cell, the lower folded portion may be provided with a void filling material that fills voids in the separator.

Accordingly, the electrolytic solution is more reliably held by the lower folded portion.

The power storage cell may further comprise: a liquid holding member which is different from the separator and is configured to hold an electrolytic solution, wherein the liquid holding member is provided on at least one of an end of the separator in the vertical direction and an end of the separator in the width direction orthogonal to both the one direction and the vertical direction.

Accordingly, since the electrolytic solution released from the negative electrode is held by the liquid holding member, the negative electrode absorbs the electrolytic solution again, which thereby prevents the negative electrode from becoming short of the electrolytic solution.

Although the present disclosure has been described and illustrated in detail, it is clearly understood that the same is by way of illustration and example only and is not to be taken by way of limitation, the scope of the present invention is defined by the appended claims.

## Claims

1. A power storage cell (1) comprising:
an electrode assembly (100);
a cell case (200) that houses the electrode assembly; and
an electrolytic solution contained in the cell case,
wherein the electrode assembly (100) includes:
a plurality of electrodes (110, 120) arranged side by side in one direction; and
a separator (130) formed in a zigzag shape and configured to insulate the plurality of electrodes from each other,
the separator includes:
a plurality of intervening portions (132a), each of which is interposed between a pair of electrodes adjacent to each other in the one direction;
an upper folded portion (132b) which connects an upper end of one intervening portion of the plurality of intervening portions and an upper end of another intervening portion of the plurality of intervening portions which is adjacent to the one intervening portion on one side of the one direction; and
a lower folded portion (132c) which connects a lower end of the one intervening portion of the plurality of intervening portions and a lower end of another intervening portion of the plurality of intervening portions which is adjacent to the one intervening portion on the other side of the one direction,
the plurality of electrodes include a plurality of positive electrodes (110) and a plurality of negative electrodes (120),
the negative electrode is disposed above the lower folded portion (132c), and
the porosity of the lower folded portion (132c) is smaller than that of the intervening portion (132a),
**characterized in that**:
the separator further includes a side covering portion (134) which faces both ends of the plurality of electrodes in a width direction orthogonal to both the one direction and a vertical direction and is connected to the lower folded portion,
the side covering portion and the lower folded portion form a storage space (S) for storing the electrolytic solution below the negative electrode, and
the side covering portion (134) is provided with a void filling material that fills voids in the separator.

2. The power storage cell according to claim 1, wherein
the lower folded portion is provided with a void filling material (136) that fills voids in the separator.

3. The power storage cell according to claim 1 further comprising:
a liquid holding member (150) which is different from the separator and is configured to hold an electrolytic solution, wherein
the liquid holding member (150) is provided on at least one of an end of the separator in the vertical direction and an end of the separator in the width direction orthogonal to both the one direction and the vertical direction, and
the liquid holding member (150) is made of a porous material.

## Patentansprüche

1. Energiespeicherzelle (1), die umfasst:
eine Elektrodenanordnung (100);
ein Zellgehäuse (200), das die Elektrodenanordnung aufnimmt; und
eine in dem Zellgehäuse enthaltene Elektrolytlösung,
wobei die Elektrodenanordnung (100) enthält:
eine Vielzahl von Elektroden (110, 120), die nebeneinander in einer Richtung angeordnet sind; und
einen Separator (130), der in einer Zickzackform gebildet und so konfiguriert ist, dass er die Vielzahl von Elektroden voneinander isoliert,
wobei der Separator enthält:
eine Vielzahl von Zwischenabschnitten (132a), von denen jeder zwischen einem Paar von Elektroden angeordnet ist, die in der einen Richtung benachbart zueinander sind;
einen oberen gefalteten Abschnitt (132b), der ein oberes Ende eines Zwischenabschnitts der Vielzahl von Zwischenabschnitten und ein oberes Ende eines anderen Zwischenabschnitts der Vielzahl von Zwischenabschnitten verbindet, der an den einen Zwischenabschnitt auf der anderen Seite der einen Richtung angrenzt; und
einen unteren gefalteten Abschnitt (132c), der ein unteres Ende des einen Zwischenabschnitts der Vielzahl von Zwischenabschnitten und ein unteres Ende eines anderen Zwischenabschnitts der Vielzahl von Zwischenabschnitten verbindet, der an den einen Zwischenabschnitt auf der anderen Seite der einen Richtung angrenzt;
wobei die Vielzahl von Elektroden eine Vielzahl von positiven Elektroden (110) und eine Vielzahl von negativen Elektroden (120) enthält,
die negative Elektrode über dem unteren gefalteten Abschnitt (132c) angeordnet ist, und
die Porosität des unteren gefalteten Abschnitts (132c) kleiner ist als die des Zwischenabschnitts (132a),
**dadurch gekennzeichnet, dass**
der Separator ferner einen Seitenabdeckungsabschnitt (134) umfasst, der beiden Enden der Vielzahl von Elektroden in einer Breitenrichtung orthogonal zu sowohl der einen Richtung als auch einer vertikalen Richtung zugewandt ist und mit dem unteren gefalteten Abschnitt verbunden ist,
der Seitenabdeckungsabschnitt und der untere gefaltete Abschnitt einen Speicherraum (S) zum Speichern der Elektrolytlösung unterhalb der negativen Elektrode bilden, und
der Seitenabdeckungsabschnitt (134) mit einem Hohlraumfüllmaterial versehen ist, das Hohlräume in dem Separator füllt.

2. Energiespeicherzelle nach Anspruch 1, wobei
der untere gefaltete Abschnitt mit einem Hohlraumfüllmaterial (136) versehen ist, das Hohlräume in dem Separator füllt.

3. Energiespeicherzelle nach Anspruch 1, die ferner umfasst:
ein Flüssigkeitshalteelement (150), das sich von dem Separator unterscheidet und so konfiguriert ist, dass es eine Elektrolytlösung hält, wobei
das Flüssigkeitshalteelement (150) an mindestens einem Ende des Separators in vertikaler Richtung und einem Ende des Separators in Breitenrichtung orthogonal sowohl zu der einen Richtung als auch zu der vertikalen Richtung vorgesehen ist, und
das Flüssigkeitshalteelement (150) aus einem porösen Material besteht.

## Revendications

1. Cellule de stockage d'énergie (1) comprenant :
un ensemble d'électrodes (100) ;
un boîtier de cellule (200) qui loge l'ensemble d'électrodes ; et
une solution électrolytique contenue dans le boîtier de cellule,
dans laquelle l'ensemble d'électrodes (100) inclut :
une pluralité d'électrodes (110, 120) agencées côte à côte dans une direction ; et
un séparateur (130) en forme de zigzag et configuré pour isoler la pluralité d'électrodes les unes des autres,
le séparateur inclut :
une pluralité de portions intermédiaires (132a), chacune d'entre elles étant interposée entre une paire d'électrodes adjacentes l'une à l'autre dans ladite une direction ;
une portion pliée supérieure (132b) qui raccorde une extrémité supérieure d'une portion intermédiaire de la pluralité de portions intermédiaires et une extrémité supérieure d'une autre portion intermédiaire de la pluralité de portions intermédiaires qui est adjacente à ladite une portion intermédiaire d'un côté de ladite une direction ; et
une portion pliée inférieure (132c) qui raccorde une extrémité inférieure de ladite une portion intermédiaire de la pluralité de portions intermédiaires et une extrémité inférieure d'une autre portion intermédiaire de la pluralité de portions intermédiaires qui est adjacente à ladite une portion intermédiaire de l'autre côté de ladite une direction,
la pluralité d'électrodes incluent une pluralité d'électrodes positives (110) et une pluralité d'électrodes négatives (120),
l'électrode négative est disposée au-dessus de la portion pliée inférieure (132c), et
la porosité de la portion pliée inférieure (132c) est plus petite que celle de la portion intermédiaire (132a),
**caractérisée en ce que** :
le séparateur inclut en outre une portion de recouvrement latérale (134) qui fait face aux deux extrémités de la pluralité d'électrodes dans une direction de largeur orthogonale à la fois à ladite une direction et à une direction verticale et qui est raccordée à la portion pliée inférieure,
la portion de recouvrement latérale et la portion pliée inférieure forment un espace de stockage (S) pour stocker la solution électrolytique sous l'électrode négative, et
la portion de recouvrement latérale (134) est pourvue d'un matériau de comblement de vides qui comble les vides dans le séparateur.

2. Cellule de stockage d'énergie selon la revendication 1, dans laquelle
la portion pliée inférieure est pourvue d'un matériau de comblement de vides (136) qui comble les vides dans le séparateur.

3. Cellule de stockage d'énergie selon la revendication 1 comprenant en outre :
un élément contenant un liquide (150) qui est différent du séparateur et qui est configuré pour contenir une solution électrolytique, dans laquelle
l'élément contenant un liquide (150) est prévu sur au moins une parmi une extrémité du séparateur dans la direction verticale et une extrémité du séparateur dans la direction de largeur orthogonale à la fois à ladite une direction et à la direction verticale, et
l'élément contenant un liquide (150) est constitué d'un matériau poreux.
